(19) Europäisches Patentamt
European Patent Office
Office européen des brevets

(11) **EP 2 326 075 A2**

(12) **EUROPEAN PATENT APPLICATION**

(43) Date of publication:
**25.05.2011 Bulletin 2011/21**

(51) Int Cl.:
***H04N 3/36*** *(2006.01)*

(21) Application number: **10001281.4**

(22) Date of filing: **08.02.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **19.11.2009 CN 200910222616**

(71) Applicant: **Mustec Systems Inc.**
**Hsin-Chu City, (TW)**

(72) Inventors:
- **Yu, Anchi**
**Hsinchu City (TW)**
- **Wen, Hui-Wen**
**Zhudong Township**
**Hsinchu County (TW)**

(74) Representative: **Weber, Joachim**
**Hoefer & Partner**
**Patentanwälte**
**Pilgersheimer Strasse 20**
**81543 München (DE)**

(54) **Film scanner**

(57) A film scanner (200, 300) includes a specular surface (240, 340) for changing a path and a direction of lights for focusing an image, which is filmed on a film, on a sensing module (250, 350). With such a disposition, a height of the film scanner (200, 300) is shortened, and a volume of the film scanner (200, 300) is shortened as a result. The film scanner (200, 300) is also burnt with a driver program on a circuit board, which implements or carries an image processing module (270, 370), so that the film scanner (200, 300) is capable of scanning the image filmed on the film without being connected to a computer, and conveniences in usage and carry of the film scanner (200, 300) is introduced as a result.

200
θ1
250
260
210
280
A2
270
A1
Lights
240
220
230

FIG. 2

EP 2 326 075 A2

## Description

The present invention relates to a film scanner of changing both a direction and a path of transmitting lights with the aid of a specular surface for reducing its volume according to the pre-charactering clause of claim 1.

A conventional camera takes films, which include positive films or negative films, for recording images. While an observer would like to observe a filmed image on a film, the film may be developed chemically on blank photos to show the filmed image on the film. Besides, the filmed image on the film may also be transformed into digital images by scanning said film with lights, for displaying the filmed images or storing said filmed images into a memory accordingly.

However, a conventional film scanner implemented with the above-mentioned techniques requires a path of transmitting lights with a certain length, therefore, a volume of the conventional film scanner is required to be larger as a result.

This in mind, the present invention aims at providing a film scanner of changing both a direction and a path of transmitting lights with the aid of a specular surface for reducing its volume.

This is achieved by a film scanner of changing both a direction and a path of transmitting lights with the aid of a specular surface for reducing its volume according to claim 1. The dependent claims pertain to corresponding further developments and improvements.

As will be seen more clearly from the detailed description following below, the claimed film scanner can utilize a specular surface disposed on the second inner lateral of the housing, where the sensing module forms an included angel with the specular surface at an extending orientation of the sensing module.

In the following, the invention is further illustrated by way of example, taking reference to the accompanying drawings. Thereof:

FIG. 1 is a schematic lateral perspective diagram of a conventional film scanner,
FIGs. 2-7 are schematic side views of a film scanner according to a first embodiment of the present invention, where FIG. 2 is a perspective view for illustrating elements included by the film scanner within,
FIG. 8 is a schematic solid diagram of the film scanner shown in FIGs. 2-7,
FIGs . 9-14 are schematic side views of a film scanner according to a second embodiment of the present invention, where FIG. 9 is a perspective view for illustrating elements included by the film scanner within, and
FIG. 15 is a schematic solid diagram of the film scanner shown in FIGS. 9-14.

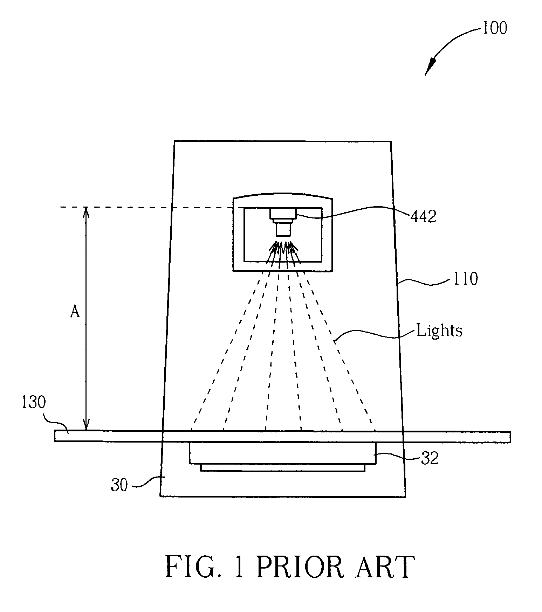

Please refer to FIG. 1, which is a schematic lateral perspective diagram of a conventional film scanner 100. As shown in FIG. 1, the film scanner includes a housing 110, a camera lens 442, a film holder 130, a base 30, and a backlight module 32, which is disposed on an upper side of the base 30. While the film is carried on the film holder 130, lights given by the backlight module 32 pass through the film to reach the camera lens 442 so that the film scanner 100 is capable of receiving images filmed on the film and digitizing the received image. As can be observed in FIG. 1, after the lights pass through the film carried by the film holder, for having the image filmed on the film to be completely focused on the camera lens 442, the lights pass through most of an inner side of the film scanner, i.e., the path length A indicated in FIG. 1, to reach the camera lens 442. Therefore, the film scanner 100 has to be larger in its volume.

Besides, a conventional film scanner has to be directly connected to a computer so that a user of the computer may operate the film scanner by using the computer as an interface, may scan the film, and may store a digital image transformed from the scanned film. However, connecting the film scanner with the computer may bring inconveniences to the user as well.

The paragraphs below disclose certain embodiments of a film scanner in the present invention for solving the above-mentioned defects in conventional film scanners.

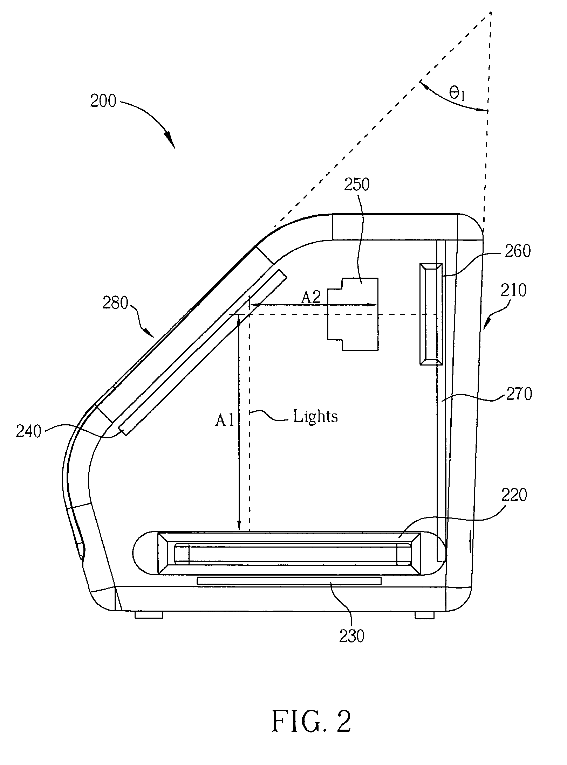

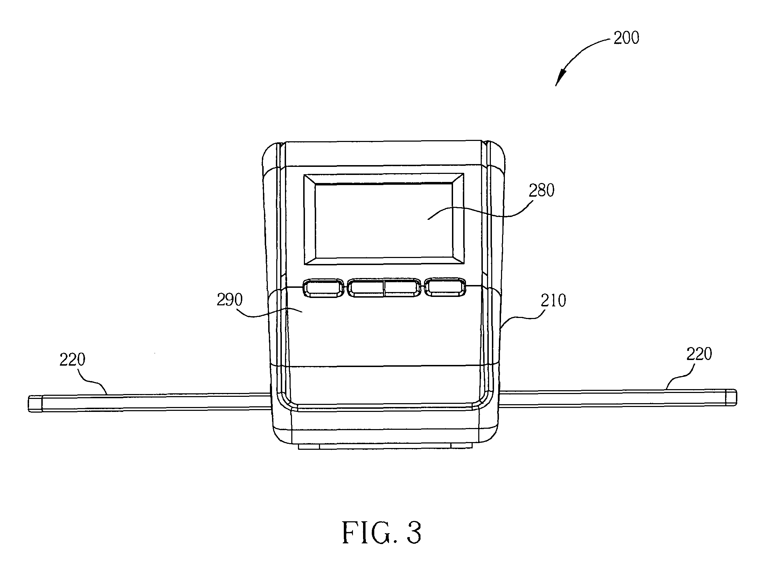

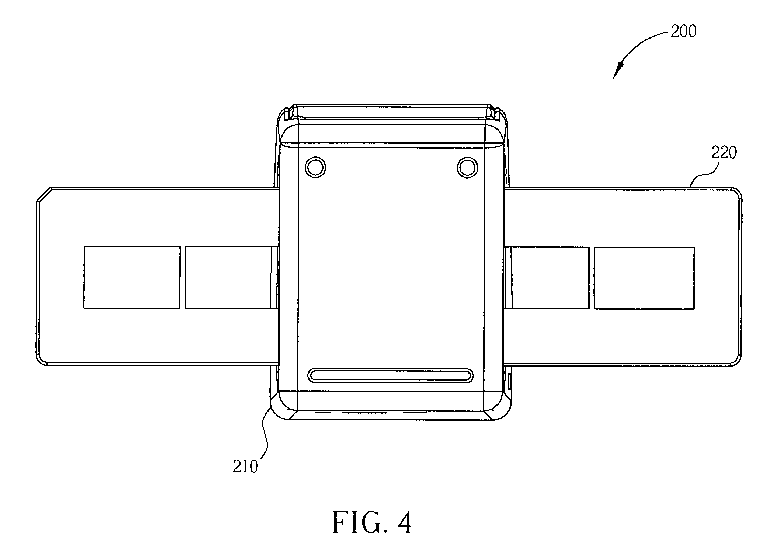

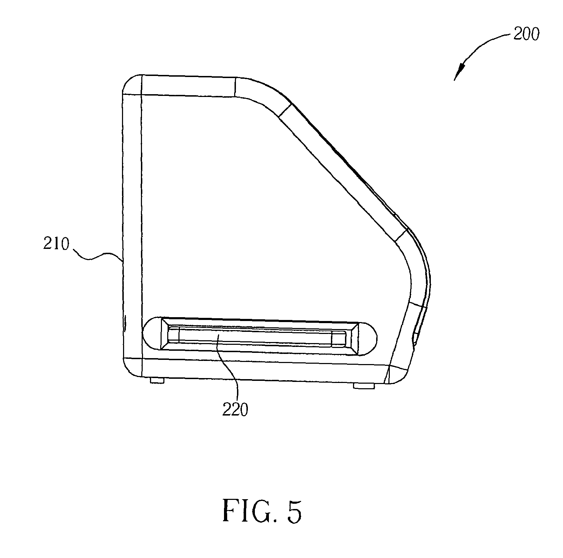

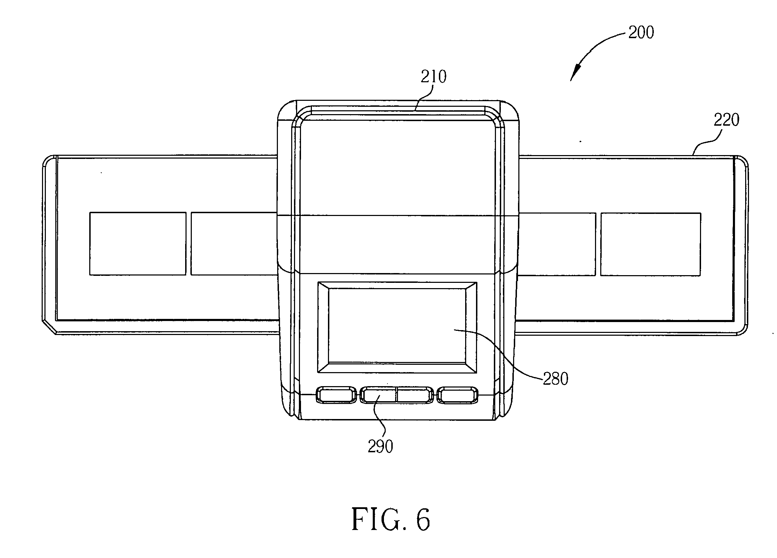

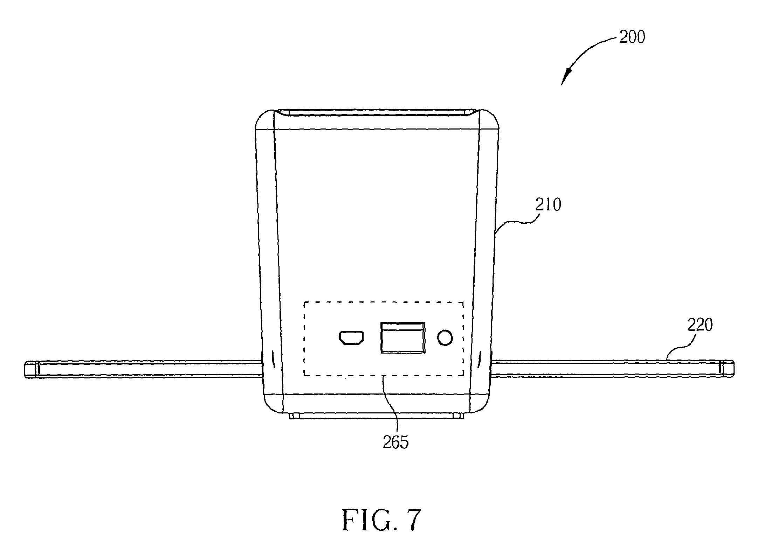

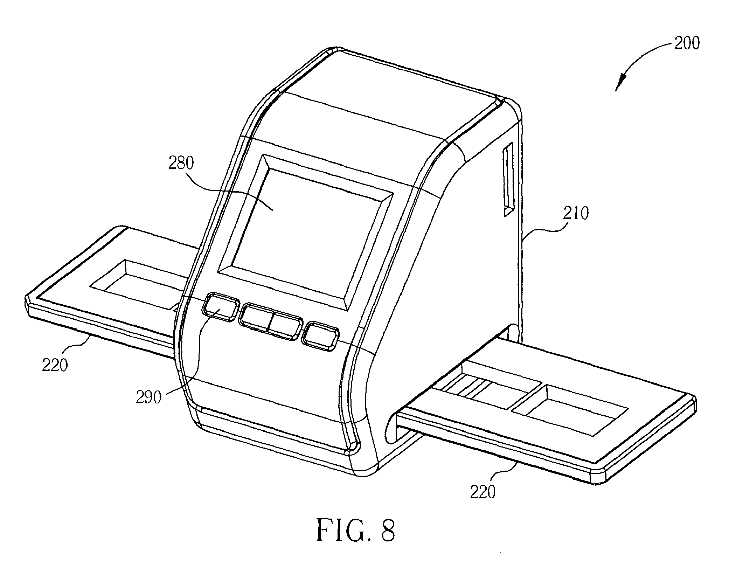

Please refer to FIGs. 2-7, which are schematic side views of a film scanner 200 according to a first embodiment of the present invention, where FIG. 2 is a perspective view for illustrating elements included by the film scanner 200 within, and FIG. 8 is a schematic solid diagram of the film scanner 200. As shown form FIG. 2 to FIG. 8, the film scanner 200 includes a housing 210, a film holder 220, a backlight module 230, a specular surface 240, a sensing module 250, a secure digital memory card holder 260, an image processing module 270, a display panel 280, and a control panel 290. The sensing module 250 is disposed on a first inner lateral of inner of the housing 210 and near an inner top of the housing 210. The specular surface 240 is disposed on a second inner lateral of inner of the housing 210, where the first and second inner laterals of the housing 210 forms an included angle, which as the angle $\theta_1$ shown in FIG. 2. The film holder 220 is disposed on an inner bottom of the housing 210. The backlight module 230 is disposed on an inner bottom of the housing 210, and the film holder 220 is disposed at an upper side of the backlight module 230, so that the backlight module 230 is capable of providing required lights in displaying images filmed on the film carried on the film holder 220. The specular surface 240 is used for reflecting lights passing the film and coming from the backlight module 230. The sensing module 250 is disposed inside the housing, and is used for collected the lights reflected from the specular surface 240 to receive the image filmed on the film. The image processing module 270 is used for transforming the image received by the sensing module 250 into a digital image. In an embodiment of the present invention, the image processing module 270 is implemented with a circuit board, which is burnt with a driver program for driving the image processing module 270 to run the function of transforming the received image into the digital image. While the image processing module 270 outputs the digital image, the image processing module 270 is capable of transmitting the digital image onto the display panel 280 through transmission lines buried within the housing 210 according to a command issued from the control panel 290 by a user of the film scanner, where the transmission lines are not illustrated for clearness of diagrams. The image processing module 270 is also capable of storing the digital image into a secure digital memory cared carried by the secure digital memory card holder 260 according to the command issued from the control panel 290 by the user. The user is able to observe the digital image stored in the secure digital card by taking the secure digital memory card out of the secure digital memory card holder 260 and loading said secure digital memory card into an external image reading device. In an embodiment of the present invention, a power receiving base 265 may also be disposed as shown in FIG. 7 for providing required power to the film scanner 200.

The film scanner 200 disclosed in the present invention is primarily characterized in reflecting the lights from the backlight module 230 to the sensing module 250 with the aid of the specular surface 240, where a total length of a path of lights equals to a path length A1 plus a path length A2 shown in FIG. 2, where the total length is roughly equal to the path length A shown in FIG. 1. In other words, in comparison to the film scanner 100 shown in FIG. 1, the film scanner 200 disclosed in the present invention requires a shorter height. Moreover, since the path length A2 merely takes part of an original width of the film scanner 200, a volume of the film scanner 200 is at most $\frac{A1}{A}$ of the volume of the film scanner 100. As a result, the film scanner 200 is much smaller than the film scanner 100 in volume. Moreover, since the path of lights is merely turned once, i.e. the direction of the path of lights within the film scanner 200 is changed once, loss in luminance of the lights may be negligible so that obvious distortion of the image received by the sensing module 250 is not introduced. Besides, the film scanner 200 is not required to be connected to a computer for having a user operate the film scanner 200 with the aid of the computer, instead, the user is enabled to directly operate the film scanner merely with the aid of the driver program installed on the circuit board, which implements the image processing module 270. Therefore, conveniences in usage and carry by the user may also be introduced.

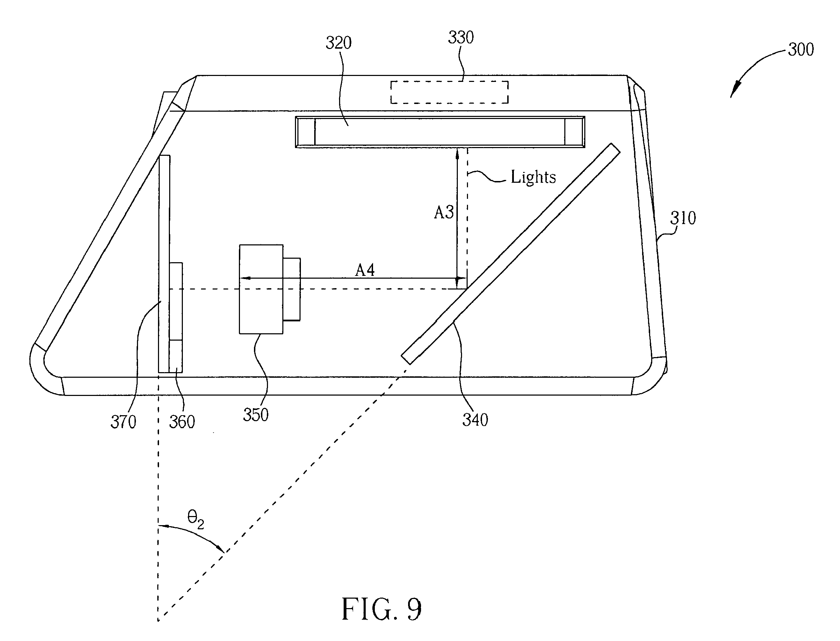

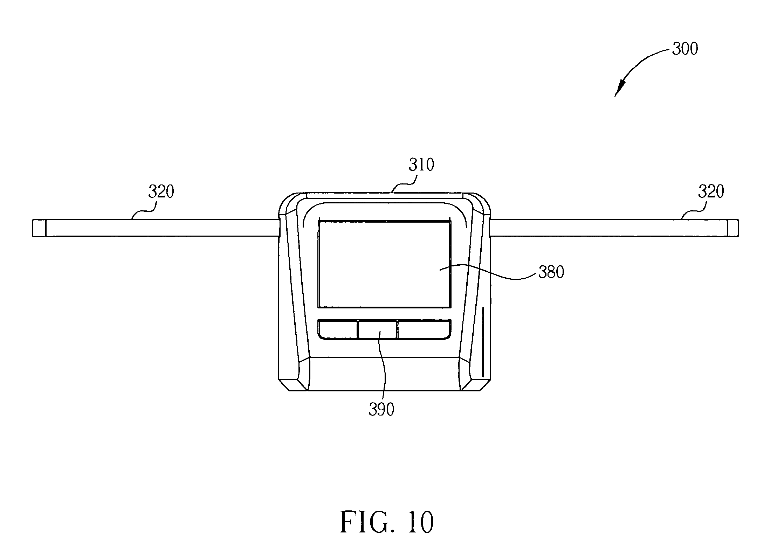

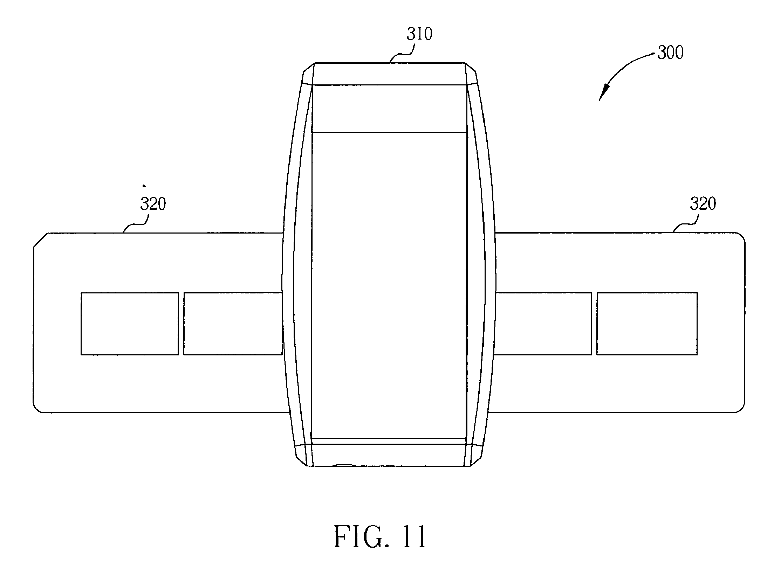

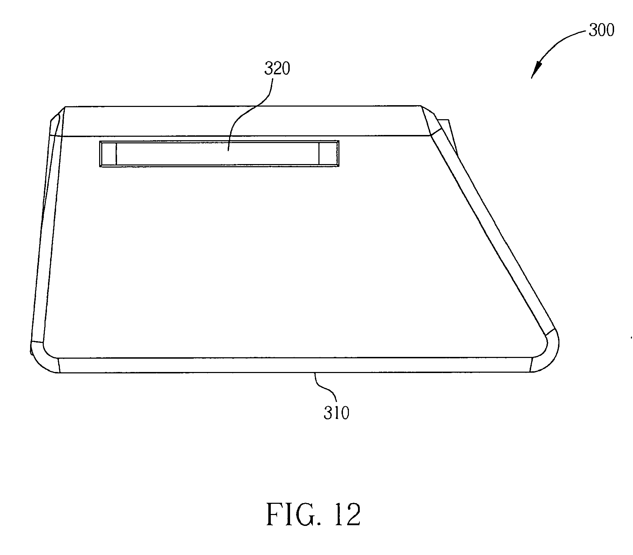

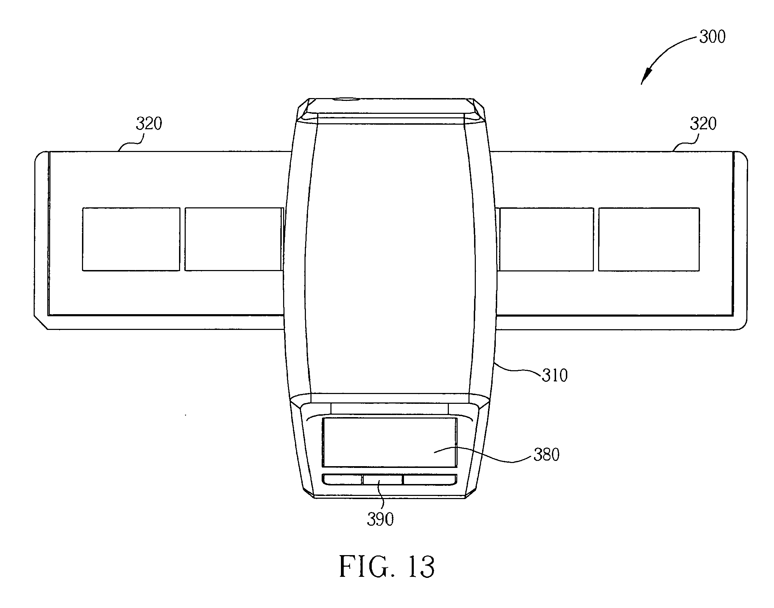

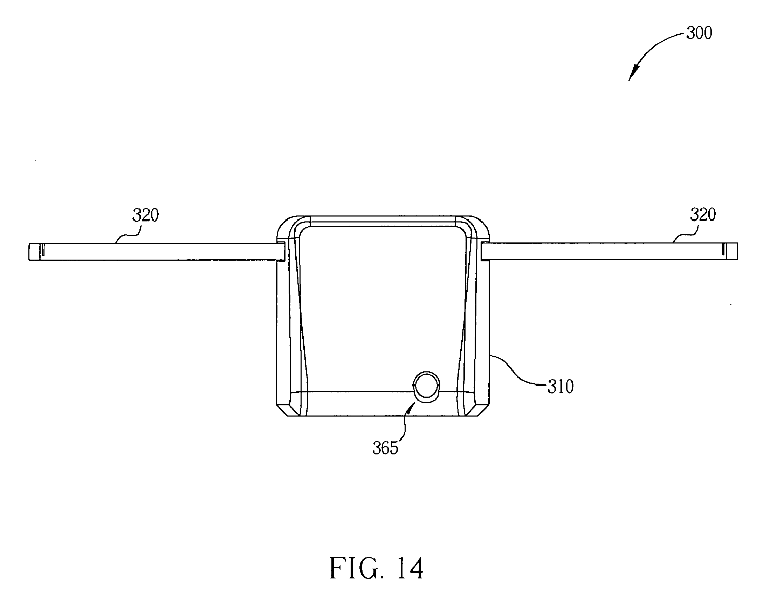

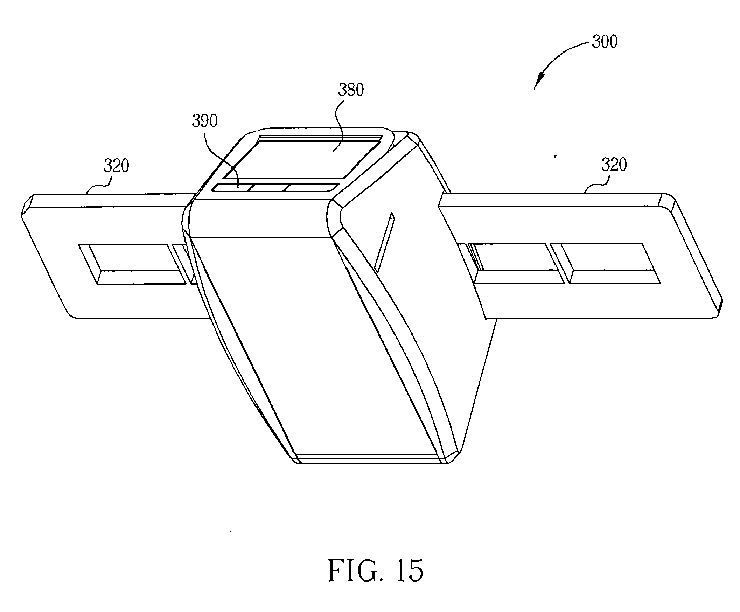

Please refer to FIGs. 9-14, which are schematic side views of a film scanner 300 according to a second embodiment of the present invention, where FIG. 9 is a perspective view for illustrating elements included by the film scanner 300 within, and FIG. 15 is a schematic solid diagram of the film scanner 300. As shown from FIG. 9 to FIG. 15, the film scanner 300 includes a housing 310, a film holder 320, a backlight module 330, a specular surface 340, a sensing module 350, a secure digital memory card holder 360, an image processing module 370, a display panel 380, and a control panel 390, where a power receiving base 365 may also be further included by the film scanner 300. The sensing module 350 is disposed close to a first inner lateral of the housing and close to an inner bottom of the housing 310. The specular surface 340 is disposed on a second inner lateral of the housing 310, and the sensing module 350 forms an included angle with the second inner lateral of the housing 310, for example, the angle $\theta_2$ shown in FIG. 9. The film scanner 300 is similar with the film scanner 200 shown in FIGs. 2-8 in composition and elements, except for the fact that the film holder 220 is disposed at the inner bottom of the film scanner 200, whereas the film holder 320 is disposed at the inner top of the film scanner 300. Based on the fact, the backlight module 330 is disposed on the inner top of the film scanner 300, and the sensing module 350 is disposed at the inner bottom of the film scanner 300 as shown in FIG. 9 for receiving lights reflected from the specular surface 340. A path length of lights inside the film scanner 300 is similar to the path length of lights inside the film scanner 200, so that the film scanner 300 may also reduce its volume.

The present invention discloses a film scanner, which includes a specular surface for changing a path and a direction of lights for focusing an image, which is filmed on a film, on a sensing module. With such a disposition, a height of the film scanner is shortened, and a volume of the film scanner is shortened as a result. The film scanner of the present invention is also burnt with a driver program on a circuit board, which implements or carries an image processing module, so that the film scanner is capable of scanning the image filmed on the film without being connected to a computer, and conveniences in usage and carry of the film scanner is introduced as a result.

## Claims

**1.** A film scanner (200, 300), comprising:

a housing (210, 310) having a first inner lateral, a second inner lateral, and a third inner lateral;
a backlight module (230, 330) disposed on the third inner lateral of the housing (210);
a film holder (220, 320) disposed within the housing (210, 310) and corresponding to the backlight module (230,330);
a sensing module (250, 350) disposed on the first inner lateral of the housing (210, 310); and
an image processing module (270, 370) connected to the sensing module (250, 350);

**characterized in that**:

the film scanner (200, 300) further comprises a specular surface (240, 340) disposed on the second inner lateral of the housing (210, 310); and
that the sensing module (250, 350) forms an included angel with the specular surface (240, 340) at an extending orientation of the sensing module (250, 350).

2. The film scanner (200, 300) of claim 1, **characterized in that** the film scanner (200, 300)further comprises:

a secure digital memory card holder (260, 360) , for carrying a secure digital memory card.

3. The film scanner (200, 300) of claim 1, **characterized in that** the film scanner (200, 300)further comprises:

a display panel disposed on the housing (280, 380).

4. The film scanner (200, 300) of claim 1, **characterized in that** the film scanner (200, 300)further comprises:

a control panel (290, 390) disposed on the housing (210, 310).

5. The film scanner (200, 300) of claim 1, **characterized in that** the image processing module (270, 370) is implemented with a circuit board, which is burnt with a driver program for driving the image processing module (270, 370).

6. The film scanner (200, 300) of claim 1, **characterized in that** the film holder (220, 320) is disposed at an inner bottom of the housing (210, 310), the backlight module (230, 330) is disposed at the inner bottom of the housing (210, 310) and at a lower side of the film holder (220, 320).

7. The film scanner (200, 300) of claim 1, **characterized in that** the film holder (220, 320) is disposed at an inner top of the housing (210, 310), and the backlight module (230, 330) is disposed at the inner top and at an upper side of the film holder (220, 320).

8. The film scanner (200, 300) of claim 1, **characterized in that** the film scanner (200, 300)further comprises a power receiving base (265, 365).

100
442
110
A
Lights
130
32
30

FIG. 1 PRIOR ART

200
θ1
250
260
210
280
A2
270
240
A1
Lights
220
230

FIG. 2

200
280
210
220
290
220

FIG. 3

200
220
210

FIG. 4

200
220
210

FIG. 5

200
220
210
280
290

FIG. 6

200
210
220
265

FIG. 7

200
210
220
280
290
220

FIG. 8

300
310
Lights
330
A3
340
320
A4
350
$\theta_2$
360
370

FIG. 9

300
320
380
310
390
320

FIG. 10

300
310
320
320

FIG. 11

300
320
310

FIG. 12

300
320
310
380
390
320

FIG. 13

300
320
310
365
320

FIG. 14

300
320
380
390
320

FIG. 15